# EUROPÄISCHE PATENTSCHRIFT

(11) **EP 0 288 675 B1**
(45) Veröffentlichungstag und Bekanntmachung des Hinweises auf die Patenterteilung: **13.04.1994**
(21) Anmeldenummer: 88102272.7
(22) Anmeldetag: 17.02.1988
(51) Int. Cl.: H04Q 11/04, H04J 14/00

(54) **Digitales Übertragungssystem**
Digital transmission system
Système de transmission numérique

(30) Priorität: 25.04.1987 DE 3713933
(43) Veröffentlichungstag der Anmeldung: 02.11.1988
(73) Patentinhaber: KABEL RHEYDT Aktiengesellschaft, D-41179 Mönchengladbach (DE)
(72) Erfinder: Hildebrandt, Hans-Georg, Dr., D-5600 Wuppertal 12 (DE)
(74) Vertreter: Mende, Eberhard, Dipl.-Ing.

(56) Entgegenhaltungen:
- EP-A- 0 053 236
- EP-A- 0 076 362
- EP-A- 0 094 096
- ELECTRONICS LETTERS, Band 22, Nr. 10, 8. mai 1986, Seiten 534-535, Stevenage, Herts, GB; P. STAUBLI et al.: "Bidirectional 2 Mbit/s transmission over a single fibre using electrical echo cancellation"
- ELECTRONICS LETTERS, Band 22, Nr. 3, 30. Januar 1986, Seiten 143-144, Stevenage, GB; R.A. BETTS et al.: "Low-cost 2 Mbit/s optical local line transmission system using single-mode fibre"
- PROCEEDINGS 9TH EUROPEAN CONFERENCE ON OPTICAL COMMUNICATION, Geneva, 23. - 26. Oktober 1983, Seiten 483-486, Elsevier Science Publishers B.V., North-Holland, NL; M. DE BARTOLI et al.: "Economic comparison of W.D.M. systems with viable alternative solutions"

## Beschreibung

Die Erfindung bezieht sich auf ein digitales Übertragungssystem zur bidirektionalen Übertragung von Signalen zwischen einer Vermittlungsstelle eines Fernsprechnetzes und an dieselbe angeschlossenen Teilnehmern, bei welchem zwischen der Vermittlungsstelle und den Teilnehmern ein Multiplexer angeordnet ist, durch welchen den einzelnen Teilnehmern zugeordnete Informationskanäle aufgeteilt und die von den Teilnehmern kommenden Signale zur gemeinsamen Übertragung zusammengefaßt werden (DE-Buch "Jahrbuch der Deutschen Bundespost", 1984, Seiten 528 bis 537).

Ein solches digitales Übertragungssystem ist beispielsweise für ein gemeinsames Netz für Telefon-, Daten- und Textübertragungsdienste (dienstintegriertes Netz) vorgesehen, z. B. für das ISDN (Integrated Services Digital Network). In diesem Übertragungssystem werden gemäß dem eingangs erwähnten DE-Buch jedem Teilnehmer im bidirektionalen Basisanschluß zwei Informationskanäle und ein Dienstkanal zur Verfügung gestellt. Der Multiplexer ist vorgesehen, um eine Gruppe von z. B. zwölf Basisanschlüssen über eine höherratige bidirektionale Digitalsignalverbindung für beispielsweise 2 Mbit/s an eine Vermittlungsstelle des Netzes anzuschließen. Die von der Vermittlungsstelle kommenden Kanäle werden im Multiplexer auf die einzelnen Basisanschlüsse aufgeteilt, während die von den Teilnehmern kommenden Signale von demselben zusammengefaßt werden. Dabei kann die Übertragung der Signale zwischen der Vermittlungsstelle und dem Multiplexer wahlweise über Kupfer-Doppeladern, Lichtwellenleiter oder Richtfunk erfolgen. Auf der Teilnehmerseite des Multiplexers sind Uₖₒ-Schnittstellen vorgesehen, an welche die Teilnehmer über Kupfer-Doppeladern angeschlossen sind. Die Uₖₒ-Schnittstellen sind Zweidrahtschnittstellen und daher ohne Zusatzmaßnahmen nicht für den Anschluß von Übertragungsstrecken optischer Signale, also von Lichtwellenleitern, geeignet.

Der Erfindung liegt die Aufgabe zugrunde, das eingangs geschilderte digitale Übertragungssystem so weiterzubilden, daß die Anwendung der optischen Übertragungstechnik auch im Teilnehmeranschlußbereich in einfacher Weise ermöglicht.

Diese Aufgabe wird gemäß der Erfindung dadurch gelöst,
- daß der Multiplexer für jeden Teilnehmer eine Vierdraht-Schnittstelle aufweist, an die jeweils eine aus Sender und Empfänger bestehende erste optische Übertragungseinheit angeschlossen ist, von welcher eine zum jeweiligen Teilnehmer führende Übertragungsstrecke für optische Signale ausgeht, und
- daß jede Übertragungsstrecke beim Teilnehmer mit einer aus Empfänger und Sender bestehenden zweiten optischen Übertragungseinheit abgeschlossen ist.

Bei diesem Übertragungssystem kann auch zwischen den Teilnehmern und dem Multiplexer die vorteilhafte optische Übertragungstechnik eingesetzt werden, ohne daß dafür zusätzliche Schaltungen und Geräte benötigt werden. Die optischen Übertragungsstrecken, d. h. die Lichtwellenleiter, können mit ihren Sendern und Empfängern vielmehr direkt an die Vierdraht-Schnittstellen des Multiplexers angeschlossen werden. Dabei werden insbesondere keine Bauteile mit Übergängen von Zweidraht- auf Vierdraht-Schnittstellen und umgekehrt benötigt, für die in integrierter Technik etwa 110.000 Transistorfunktionen erforderlich sind. Der schaltungstechnische Aufwand und der Aufwand an teuren Bauteilen ist bei diesem Übertragungssystem also minimiert.

Die optische Übertragung kann mit je einem Lichtwellenleiter für Hin- und Rückrichtung erfolgen. Es besteht jedoch auch die Möglichkeit, die optische Übertragung mittels nur eines Lichtwellenleiters bei verschiedenen Lichtwellenlängen (Wellenlängen-Multiplex) oder auch bei nur einer Lichtwellenlänge vorzunehmen. Diese Art der Übertragung ist mit optischen Richtkopplern möglich. Bei der nicht wellenlängenselektiven Übertragung mit optischen Richtkopplern sind unterschiedliche Verfahren realisierbar:

Es ist einmal möglich, die bei der gleichzeitigen Übertragung in Hin- und Rückrichtung durch Reflexion und Übersprechen entstehenden störenden Signalanteile mittels einer elektrischen Echokompensation weitgehend zu eliminieren. Alternativ kann bei einem Übertragungsverfahren mit nur einem Lichtwellenleiter mit optischen Richtkopplern eine zeitliche Trennung von Sende- und Empfangsinformationen erfolgen. Dieses Verfahren zur Richtungstrennung wird als Zeitgetrenntlageverfahren (Ping-Pong) bezeichnet.

Die Erfindung wird im folgenden anhand der Zeichnungen als Ausführungsbeispiel erläutert.

Es zeigen:
Fig. 1 eine Schaltung für ein Übertragungssystem nach der Erfindung.
Fig. 2 eine gegenüber Fig. 1 ergänzte Schaltung.

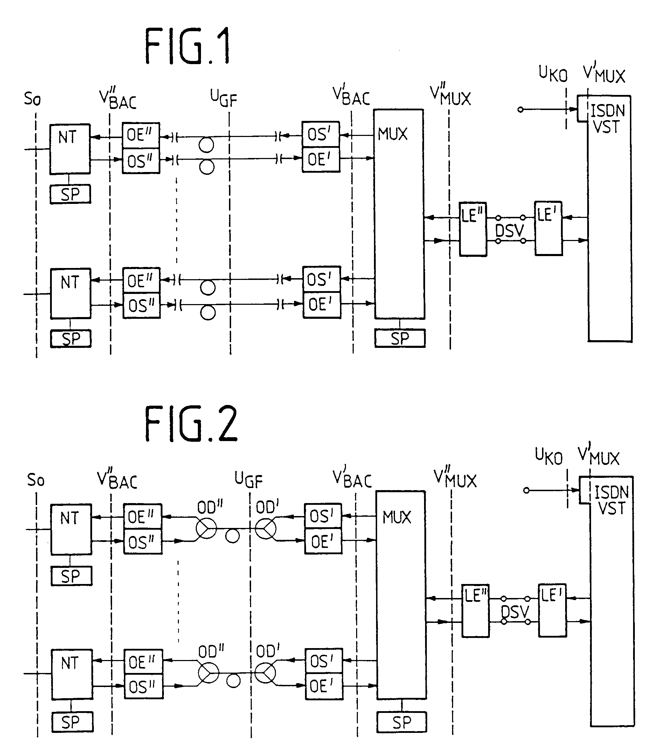

Die in Fig. 1 dargestellte Schaltung für ein digitales Übertragungssystem eignet sich für den Anschluß von Teilnehmern über Lichtwellenleiter. Dieses digitale Übertragungssystem mit bidirektionaler Übertragung findet beispielsweise für die Fernsprech- und Datenübertragung Anwendung. Auf der rechten Seite von Fig. 1 ist eine digitale Vermittlungsstelle VST dargestellt, die das Durchschalten von Teilnehmeranschlußleitungen bewirkt. Eine solche digitale Vermittlungsstelle VST ist beispielsweise eine sogenannte ISDN-Vermittlungsstelle. Die Vermittlungsstelle VST weist zwei Schnittstellen auf, und zwar die Zweidraht-Schnittstelle Uₖₒ und die Vierdraht-Schnittstelle V'_{MUX} für das Multiplexsignal.

Die V'_{MUX}-Schnittstelle der Vermittlungsstelle VST ist über eine Digital-Signal-Verbindung DSV mit der V''_{MUX}-Schnittstelle eines Multiplexers MUX - im folgenden kurz "MUX" genannt - verbunden. Die V''_{MUX}-Schnittstelle faßt ebenso wie die V'_{MUX}-Schnittstelle die Informationen mehrerer Teilnehmeranschlüsse zusammen. Sie ist wie die V'_{MUX}-Schnittstelle eine Vierdraht-Schnittstelle. Die zwischen der Vermittlungsstelle VST und dem MUX vorhandene Digital-Signal-Verbindung DSV umfaßt zwei bidirektionale Endgeräte LE' und LE'', wobei jedes Endgerät einen Empfänger und einen Sender aufweist. Die Übertragung zwischen der Vermittlungsstelle VST und dem MUX kann beispielsweise mit einer Übertragungsrate von 2 Mbit/s erfolgen. Der MUX hat die Aufgabe, den von der Vermittlungsstelle VST kommenden Signalfluß (downstream) auf mehrere Teilnehmeranschlüsse aufzuteilen und umgekehrt die Signale der einzelnen Teilnehmer in Richtung zur Vermittlungsstelle VST (upstream) zusammenzufassen.

Auf der Teilnehmerseite des MUX sind so viele Vierdrahtschnittstellen V'_{BAC} - im folgenden "V'_{BAC}-Schnittstellen" genannt - vorhanden, wie Teilnehmeranschlüsse vorliegen. Bei einer Übertragungsrate von 2 Mbit/s zwischen Vermittlungsstelle VST und MUX sind beispielsweise zwölf V'_{BAC}-Schnittstellen entsprechend zwölf Teilnehmeranschlüssen vorhanden. Auf jeden Teilnehmeranschluß entfällt in diesem Fall eine Brutto-Nutzbitrate von 160 kbit/s. An die Schnittstellen V'_{BAC} sind erste optische Übertragungseinheiten angeschlossen, die jeweils aus einem optischen Sender OS' und einem optischen Empfänger OE' bestehen. Bei beispielsweise zwölf V'_{BAC}-Schnittstellen sind dementsprechend zwölf erste optische Übertragungseinheiten vorhanden. An die ersten optischen Übertragungseinheiten sind jeweils Übertragungsstrecken U_{GF} für optische Signale angeschlossen. Sie bestehen aus Lichtwellenleitern.

Am teilnehmerseitigen Ende der Übertragungsstrecken U_{GF} sind jeweils zweite optische Übertragungseinheiten angeordnet, die jeweils aus einem optischen Empfänger OE'' und einem optischen Sender OS'' bestehen. Die optischen Sender OS' der ersten Übertragungseinheiten übertragen die optischen Signale gemäß Fig. 1 über jeweils einen Lichtwellenleiter zu den optischen Empfängern OE'' der zweiten Übertragungseinheiten bei den Teilnehmern. In entsprechender Weise erfolgt die Signalübertragung in umgekehrter Richtung von den optischen Sendern OS'' zu den optischen Empfängern OE'.

Eine aufwandsarme Übertragung der Signale auf den Übertragungsstrecken U_{GF} mit einer 1300 nm Standard-Einmodenfaser als Lichtwellenleiter ergibt sich, wenn die Übertragung bei einer optischen Wellenlänge zwischen 700 nm und 900 nm erfolgt und hierfür elektro/optische und opto/elektrische Wandler eingesetzt werden, wie sie z. B. bei digitalen Tonabtastgeräten (Compact-Disc) Verwendung finden (z. B. LTO30 und LTO90 der Firma Sharp).

Auf der Teilnehmerseite der zweiten optischen Übertragungseinheiten befindet sich eine V''_{BAC}-Schnittstelle, über welche die optischen Empfänger OE'' bzw. die optischen Sender OS'' mit Netzabschlüssen NT verbunden sind. An den Ausgängen der Netzabschlüsse NT stehen die teilnehmerseitigen genormten Vierdraht-Schnittstellen Sₒ (ISDN-Standard, CCITT Recommendation I.430) und/oder Schnittstellen für inhouse-Sternpunkte zur Verfügung.

Bei der Schaltung nach Fig. 2 erfolgt die optische Übertragung in der Übertragungsstrecke U_{GF} nur über einen Lichtwellenleiter statt über zwei Lichtwellenleiter wie bei der Schaltung nach Fig. 1. Um das zu ermöglichen, sind in den Lichtwellenleiter jeweils optische Duplexer OD' und OD'' eingeschaltet, welche die Signale der beiden Übertragungsrichtungen zusammenfassen bzw. trennen.

Der MUX und die Netzabschlüsse NT sind zur Versorgung ihrer aktiven Komponenten in bekannter Technik an eine Stromversorgung angeschlossen. Um beim Ausfall dieser Stromversorgung den Betrieb des Übertragungssystems aufrechterhalten zu können, ist eine gepufferte Speisung durch Akkumulatoren vorgesehen. Sie ist in den Fig. 1 und 2 jeweils durch ein Kästchen mit der Bezeichnung SP wiedergegeben.

## Patentansprüche

1. Digitales Übertragungssystem zur bidirektionalen Übertragung von Signalen zwischen einer Vermittlungsstelle (VST) eines Fernsprechnetzes und an dieselbe angeschlossenen Teilnehmern, bei welchem zwischen der Vermittlungsstelle (VST) und den Teilnehmern ein Multiplexer (MUX) angeordnet ist, durch welchen den einzelnen Teilnehmern zugeordnete Informationskanäle aufgeteilt und die von den Teilnehmern kommenden Signale zur gemeinsamen Übertragung zusammengefaßt werden,
dadurch gekennzeichnet,
- daß der Multiplexer (MUX) für jeden Teilnehmer eine Vierdraht-Schnittstelle (V'_{BAC}) aufweist, an die jeweils eine aus Sender (OS') und Empfänger (OE') bestehende erste optische Übertragungseinheit angeschlossen ist, von welcher eine zum jeweiligen Teilnehmer führende Übertragungsstrecke (U_{GF}) für optische Signale ausgeht, und
- daß jede Übertragungsstrecke (U_{Gf}) beim Teilnehmer mit einer aus Empfänger (OE'') und Sender (OS'') bestehenden zweiten optischen Übertragungseinheit abgeschlossen ist.

2. Übertragungssystem nach Anspruch 1, dadurch gekennzeichnet, daß die optische Übertragung über je einen Lichtwellenleiter für Hin- und Rückrichtung erfolgt.

3. Übertragungssystem nach Anspruch 1, dadurch gekennzeichnet, daß die optische Übertragung mittels nur eines Lichtwellenleiters bei verschiedenen Lichtwellenlängen (Wellenlängenmultiplex) erfolgt.

4. Übertragungssystem nach Anspruch 1, dadurch gekennzeichnet, daß die optische Übertragung mittels nur eines Lichtwellenleiters bei nur einer Lichtwellenlänge erfolgt.

5. Übertragungssystem nach Anspruch 1 oder 4, dadurch gekennzeichnet, daß für die optische Übertragung in Hin- und Rückrichtung mit derselben Lichtwellenlänge optische Richtkoppler vorgesehen sind.

6. Übertragungssystem nach Anspruch 5, dadurch gekennzeichnet, daß eine elektrische Echokompensation reflektierter und übersprechender Signalanteile vorgesehen ist.

7. Übertragungssystem nach Anspruch 5, dadurch gekennzeichnet, daß zur Richtungstrennung ein Zeitgetrenntlageverfahren (Ping-Pong) eingesetzt wird.

8. Übertragungssystem nach einem der Ansprüche 1 bis 7, dadurch gekennzeichnet, daß die optische Übertragung mit einer 1300 nm Standard-Einmodenfaser bei einer optischen Wellenlänge zwischen 750 nm und 850 nm erfolgt.

9. Übertragungssystem nach einem der Ansprüche 1 bis 8, dadurch gekennzeichnet, daß elektro/optische und opto/elektrische Wandler Verwendung finden, wie sie z. B. bei digitalen Tonabtastgeräten (Compact-Disc) eingesetzt werden.

10. Übertragungssystem nach einem der Ansprüche 1 bis 9, dadurch gekennzeichnet, daß an die zweite optische Übertragungseinheit bei jedem Teilnehmer ein spezieller Netzabschluß (NT) angeschlossen ist.

11. Übertragungssystem nach Anspruch 10, dadurch gekennzeichnet, daß der Netzabschluß (NT) teilnehmerseitig einen Anschluß für die Sₒ-Schnittstelle entsprechend CCITT Recommendation I.430 und/oder für inhouse-Sternpunkte aufweist.

## Claims

1. Digital transmission system for bidirectional transmission of signals between an exchange (VST) of a telephone network and subscribers connected to the same, in which there is arranged between the exchange (VST) and the subscribers a multiplexer (MUX) by means of which information channels assigned to the individual subscribers are demultiplexed and the signals coming from the subscribers are combined for the purpose of joint transmission, characterized in that
- the multiplexer (MUX) has for each subscriber a four-wire interface (V'_{BAC}) to which there is connected in each case a first optical transmission unit which consists of a transmitter (OS') and receiver (OE') and from which there originates a transmission link (U_{GF}) for optical signals which leads to the respective subscriber, and
- each transmission link (U_{GF}) is terminated at the subscriber by means of a second optical transmission unit consisting of a receiver (OE'') and transmitter (OS'').

2. Transmission system according to Claim 1, characterized in that the optical transmission is performed via one optical fibre each for the forward and backward directions.

3. Transmission system according to Claim 1, characterized in that the optical transmission is performed by means of only one optical fibre at different optical wavelengths (wavelength multiplexing).

4. Transmission system according to Claim 1, characterized in that the optical transmission is performed by means of only one optical fibre at only one optical wavelength.

5. Transmission system according to Claim 1 or 4, characterized in that optical directional couplers with the same wavelength are provided for the optical transmission in the forward and backward directions.

6. Transmission system according to Claim 5, characterized in that electrical echo compensation of reflected and cross-talk signal components is provided.

7. Transmission system according to Claim 5, characterized in that time division multiplex (ping pong) is used for directional separation.

8. Transmission system according to one of Claims 1 to 7, characterized in that the optical transmission is performed using a 1300 nm standard single-mode fibre at an optical wavelength of between 750 nm and 850 nm.

9. Transmission system according to one of Claims 1 to 8, characterized in that use is made of electrical/optical and optical/electrical transducers as they are used, for example, in digital sound-scanning devices (compact disc).

10. Transmission system according to one of Claims 1 to 9, characterized in that a special network termination (NT) is connected to the second optical transmission unit in the case of each subscriber.

11. Transmission system according to Claim 10, characterized in that on the subscriber side the network termination (NT) has a connection on the S₀ interface in accordance with CCITT Recommendation I.430 and/or for inhouse star points.

## Revendications

1. Système de transmission numérique pour la transmission bidirectionnelle de signaux entre un central (VST) d'un réseau téléphonique et des abonnés reliés à ce réseau, dans le cas duquel, entre le central (VST) et les abonnés est disposé un multiplexeur (MUX) grâce auquel sont répartis des canaux d'information correspondant aux différents abonnés et sont regroupés, pour transmission commune, les signaux venant des abonnés,
système caractérisé,
- par le fait que le multiplexeur (MUX) présente, pour chaque abonné, une interface à quatre fils (V'_{BAC}) à chacune desquelles est relié un premier organe de transmission optique qui est constitué d'un émetteur (OS') et d'un récepteur (OE') et d'où part une ligne de transmission (U_{GF}) pour signaux optiques conduisant à chaque abonné, et
- par le fait que chaque ligne de transmission (U_{GF}) est reliée, chez l'abonné, à un second organe de transmission optique constitué d'un récepteur (OE'') et d'un émetteur (OS'').

2. Système de transmission selon la revendication 1, caractérisé par le fait que la transmission optique se fait, à l'aller et au retour, par l'intermédiaire de, chaque fois, un guide d'ondes lumineuses.

3. Système de transmission selon la revendication 1, caractérisé par le fait que la transmission optique ne se fait qu'au moyen d'un seul guide d'ondes lumineuses pour différentes longueurs d'ondes lumineuses (multiplexage de longueurs d'onde).

4. Système de transmission selon la revendication 1, caractérisé par le fait que la transmission optique ne se fait qu'au moyen d'un unique guide d'ondes lumineuses pour une unique longueur d'onde lumineuse.

5. Système de transmission selon la revendication 1 ou 4, caractérisé par le fait que des coupleurs directifs sont prévus pour la transmission optique à l'aller et au retour avec la même longueur d'onde lumineuse.

6. Système de transmission selon la revendication 5, caractérisé par le fait qu'est prévue une annulation d'échos électriques des composantes du signal résultant de réflexion et de diaphonie.

7. Système de transmission selon la revendication 5, caractérisé par le fait que pour séparer les directions, on met en oeuvre une exploitation bidirectionnelle non simultanée (semi-duplex).

8. Système de transmission selon l'une des revendications 1 à 7, caractérisé par le fait que la transmission optique se fait avec une fibre monomode standard à 1300 nm pour une longueur d'onde optique valant entre 750 nm et 850 nm.

9. Système de transmission selon l'une des revendications 1 à 8, caractérisé par le fait que l'on utilise des transducteurs électro-optiques et opto-électriques comme ceux qui sont utilisés, par exemple dans le cas des appareils à balayage du son (compact-disc).

10. Système de transmission selon l'une des revendications 1 à 9, caractérisé par le fait qu'au second organe de transmission optique est relié, chez chaque abonné, un terminal sur réseau spécial (NT).

11. Système de transmission selon la revendication 10, caractérisé par le fait que le terminal sur réseau (NT) présente, du côté utilisateur, un raccordement pour l'interface S₀ correspondant à la recommandation I.430 du Comité Consultatif International Télégraphique et Téléphonique CCITT et/ou pour des départs internes de réseau en étoile.
